# FASCICULE DE BREVET EUROPEEN

(11) **EP 2 553 253 B1**
(45) Date de publication et mention de la délivrance du brevet: **05.06.2019**
(21) Numéro de dépôt: 11710231.9
(22) Date de dépôt: 28.03.2011
(51) Int. Cl.: F02M 35/112, F02M 26/17, F02M 26/20, F02B 29/04

(54) **COLLECTEUR DE REPARTITION DE GAZ DANS LA CULASSE D'UN MOTEUR, ENSEMBLE D'UN COLLECTEUR DE REPARTITION ET D'UNE CULASSE DE MOTEUR**
GASVERTEILERKANAL IM ZYLINDERKOPF EINES MOTORS, SATZ MIT EINEM VERTEILERKANAL UND MOTORZYLINDERKOPF
GAS DISTRIBUTION MANIFOLD IN THE CYLINDER HEAD OF AN ENGINE, SET COMPRISING A DISTRIBUTION MANIFOLD AND AN ENGINE CYLINDER HEAD

(30) Priorité: 31.03.2010 FR 1052405
(43) Date de publication de la demande: 06.02.2013
(73) Titulaire: Valeo Systemes Thermiques, 78320 Le Mesnil Saint Denis (FR)
(72) Inventeur: MARTINS, Carlos, F-78150 Le Chesnay (FR); GESSIER, Bertrand, F-78490 Montfort l'Amaury (FR)
(74) Mandataire: Metz, Gaëlle
(86) Numéro de dépôt international: PCT/EP2011/054752
(87) Numéro de publication internationale: WO 2011/120933

(56) Documents cités:
- EP-A2- 1 059 435
- EP-A2- 1 533 512
- WO-A1-97/34081
- WO-A1-2008/116568
- WO-A1-2009/141711
- WO-A1-2010/145946
- WO-A1-2011/076539
- WO-A1-2011/104118
- WO-A1-2011/120932
- DE-C1- 10 028 131
- FR-A1- 2 936 284
- GREBE U D ET AL: "DIE NEUE GENERATION DER MITTLEREN VIERZYLINDER-OTTOMOTOREN VON FIAT-GM POWERTRAIN", MTZ MOTORTECHNISCHE ZEITSCHRIFT, VIEWEG VERLAG, WIESBADEN, DE, vol. 64, no. 11, 1 novembre 2003 (2003-11-01), pages 898-902,904, XP001186388, ISSN: 0024-8525

## Description

L'invention concerne le domaine des échangeurs de chaleur et plus particulièrement les échangeurs de chaleur utilisés dans le domaine automobile.

Un moteur thermique de véhicule automobile comporte une chambre de combustion, généralement formée par une pluralité de cylindres, dans laquelle un mélange de comburant et de carburant est brûlé pour générer le travail du moteur. Les gaz admis dans la chambre de combustion sont dénommés gaz d'admission.

Dans certains cas, ces gaz d'admission doivent être refroidis avant d'être introduits dans la chambre de combustion; cette fonction est remplie par un échangeur de chaleur, qui est un refroidisseur.

De manière classique, un échangeur de chaleur comporte un faisceau d'échange de chaleur formé par une pluralité d'éléments d'échange empilés entre deux plaques d'extrémités (plaque de fond et plaque de dessus). Les espaces entre les éléments d'échange du faisceau forment des canaux de conduite d'un flux de gaz à refroidir, ici des gaz d'admission. Les éléments d'échange du faisceau sont creux et conduisent un fluide caloporteur, destiné à échanger de la chaleur avec le flux de gaz à refroidir circulant dans les canaux de conduite de fluide et ainsi le refroidir.

Afin de réduire les émissions polluantes, il est connu d'introduire dans le flux de gaz d'admission des gaz d'échappement dit "recirculés". Il s'agit de gaz d'échappement prélevés en aval de la chambre de combustion pour être réacheminés (recirculés) vers le flux de gaz d'admission, en amont de la chambre de combustion, où ils sont mélangés aux gaz d'admission en vue de leur admission dans la chambre de combustion. Traditionnellement, les gaz d'échappement recirculés sont introduits via un ou plusieurs points d'introduction ménagés dans une canalisation d'admission des gaz s'étendant entre le refroidisseur des gaz d'admission et le moteur, afin que les gaz d'échappement recirculés se mélangent avec les gaz provenant du refroidisseur.

Une tendance actuelle vise à rapprocher au maximum l'échangeur de chaleur du moteur pour gagner en compacité.

Il est connu par la demande de brevet publiée sous le numéro WO2008/116568 un module d'échange de chaleur destiné à être monté sur les cylindres d'un moteur à combustion interne. En référence aux figures 1 et 2 représentant le module de la demande WO2008/116568, le module d'échange de chaleur comprend, dans sa partie amont 110, un faisceau d'échange de chaleur 111, et dans sa partie aval 103, des canalisations de sortie 106 agencées pour se connecter respectivement aux cylindres du moteur.

Au cours de son fonctionnement, un flux de gaz d'admission G est introduit par une face amont du module d'échange pour être refroidi par le faisceau d'échange de chaleur 111, le flux refroidi étant ensuite réparti dans les canalisations de sortie du module d'échange pour être admis dans les cylindres du moteur auxquels les canalisations 106 sont respectivement connectées.

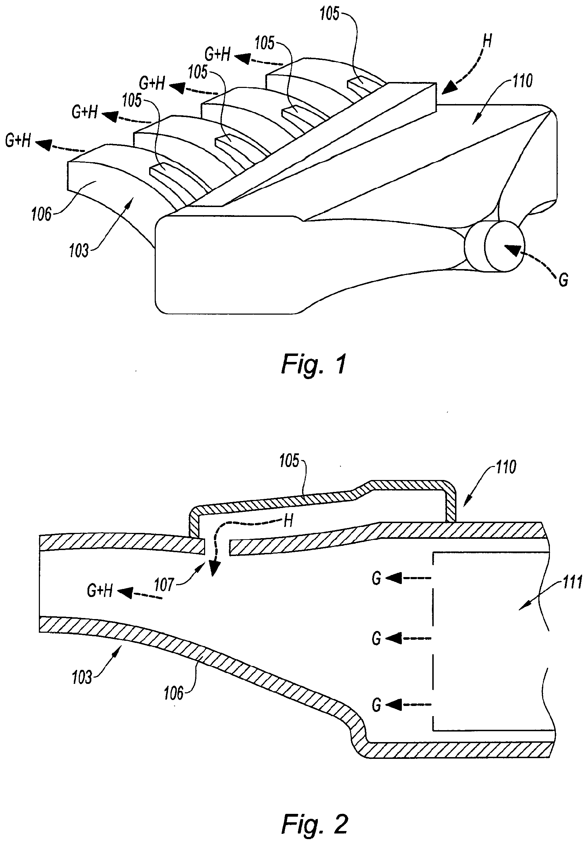

Chaque canalisation de sortie 106 du module d'échange de chaleur, dans laquelle circule le flux de gaz d'admission refroidi G, comprend un orifice d'injection 107 d'un flux de gaz d'échappement recirculés H, qui est injecté par une canalisation d'injection 105 connectée à la canalisation de sortie 106 du module d'échange au niveau dudit orifice d'injection 107, comme représenté sur la figure 2. Ainsi, le flux de gaz d'admission G et le flux de gaz d'échappement recirculés H se mélangent dans les canalisations de sortie 106 du module avant leur admission dans les cylindres du moteur. Dans l'art antérieur, l'introduction du flux de gaz d'échappement recirculés H est réalisée de manière indépendante dans chaque canalisation de sortie 106 .

Par ailleurs, le dispositif de mélange, formé par le module d'échange de chaleur et les canalisations d'injection 105 rapportées sur lui, présente un volume important. En outre, il est nécessaire de modifier de façon importante la structure des modules d'échange existants pour y ajouter des canalisations 105 d'injection de gaz d'échappement recirculés.

Par ailleurs, le dispositif de mélange avec ses canalisations d'injection de gaz d'échappement recirculés est complexe à fabriquer. De manière classique, il est formé par un procédé de fonderie connu de l'homme du métier sous la désignation « moulage avec noyau de sable ». Ce procédé de fonderie permet de former les cavités des canalisations d'injection de gaz recirculés du dispositif de mélange. Il comprend classiquement :
- une étape de positionnement d'un noyau dans un moule de fonderie dont la forme est adaptée pour former le dispositif de mélange,
- une étape de remplissage du moule de fonderie avec un matériau constitutif du dispositif de mélange tel que de l'aluminium,
- une étape de démoulage du dispositif de mélange du moule de fonderie, et
- une étape de retrait du noyau du dispositif de mélange pour former la cavité de la canalisation d'injection.

Les multiples étapes du procédé de fonderie allongent la durée de fabrication du dispositif de mélange et augmentent son coût de fabrication.

Le document WO2009/141711 représente l'état de la technique selon le préambule de la revendication 1.

Le document WO97/34081 montre une goulotte dans le répartiteur d'admission d'air, la goulotte étant formée dans le plan de sa bride. La goulotte sert à distribuer les gaz d'échappement recirculés.

Le document FR2936284 décrit l'intégration d'un dispositif de mélange de l'EGR dans une pièce d'interface agencée entre le collecteur d'air d'admission et la culasse du moteur thermique.

Afin d'éliminer au moins certains de ces inconvénients, l'invention concerne un ensemble d'une culasse d'un moteur thermique de véhicule automobile et d'un dispositif de mélange d'un flux de gaz d'admission et d'un flux de gaz d'échappement recirculés en vue de leur admission dans la culasse, selon la revendication 1.

Le collecteur de répartition selon l'invention ne comporte pas de canalisation tubulaire d'injection du flux de gaz d'échappement formant une cavité dans le carter de collecteur. Le collecteur peut avantageusement être formé par un procédé de fonderie sans nécessiter l'utilisation d'un noyau. La durée de fabrication du collecteur est ainsi raccourcie. On entend par élément extérieur au collecteur un élément qui n'est pas structural dudit collecteur et qui peut être rapporté sur ledit collecteur, comme un échangeur de chaleur ou une culasse.

De préférence, le collecteur et la goulotte d'injection sont obtenus par un procédé de fonderie par moulage sous pression. De manière avantageuse, le coût de fabrication d'un tel collecteur est réduit.

Selon un aspect de l'invention, la goulotte d'injection se présente sous la forme d'une demi-coquille.

De préférence, la face ouverte de la goulotte d'injection s'étend parallèlement à la face d'entrée ou de sortie dudit carter de collecteur. La face ouverte peut ainsi être fermée directement depuis la face d'entrée ou de sortie dudit carter de collecteur par montage d'un élément extérieur au collecteur. De préférence toujours, la face ouverte de ladite goulotte d'injection est coplanaire à la face d'entrée ou de sortie dudit carter de collecteur.

Selon un aspect de l'invention, la goulotte d'injection comporte au moins un orifice d'injection agencé pour injecter dans le carter de collecteur un flux de gaz d'échappement recirculés. De préférence, ledit orifice est orienté de manière à injecter le flux de gaz d'échappement recirculés dans le sens opposé au flux de gaz d'admission. Ainsi, une circulation à contre-courant du flux de gaz d'échappement recirculés par rapport au flux des. gaz d'admission permet de former des turbulences importantes ce qui améliore l'homogénéisation du mélange.

Selon un autre aspect de l'invention, le carter de collecteur comprenant un orifice traversant destiné au passage des gaz d'échappement recirculés, la goulotte d'injection débouche dans ledit orifice traversant. Ainsi, la goulotte d'injection ouverte débouche dans un orifice traversant sans former de cavité dans le collecteur de sortie ce qui permet de former un collecteur avec des moyens de connexion de la vanne pouvant être formé par un procédé de fonderie sans nécessiter de noyau.

De préférence, le carter de collecteur comporte un corps principal destiné à la circulation du flux de gaz d'admission, et un corps d'extension comprenant une embase destinée au montage d'une vanne d'admission de gaz d'échappement recirculés, l'orifice traversant, destiné au passage des gaz d'échappement recirculés, étant formé dans ladite embase.

De préférence toujours, l'orifice traversant, destiné au passage des gaz d'échappement recirculés, s'étend perpendiculairement à la face de sortie du carter de collecteur.

Grâce à l'invention, le flux de gaz d'échappement recirculés est injecté directement à la sortie du collecteur de sortie, ce qui permet avantageusement de mélanger le flux de gaz d'échappement recirculés avec le flux de gaz d'admission refroidis avant que le mélange ne pénètre dans les cylindres du moteur.

La culasse comporte un corps de culasse comprenant une goulotte de culasse agencée pour fermer la face ouverte de la goulotte d'injection du collecteur de sortie de manière à former une canalisation d'injection tubulaire dont le volume est partagé entre le collecteur et la culasse.

Ainsi, un même collecteur de sortie peut être monté avec différentes sortes de culasse. Cela permet d'adapter l'injection de gaz d'échappement recirculés en fonction des besoins du moteur.

L'invention sera mieux comprise à l'aide de la description suivante de la forme de réalisation préférée du dispositif de l'invention, en référence au dessin annexé, sur lequel :
- la figure 1 représente une vue en perspective d'un dispositif de mélange de gaz dans une culasse de moteur selon l'art antérieur (déjà commentée);
- la figure 2 représente une vue en coupe longitudinale du dispositif de la figure 1, la coupe étant réalisée selon la direction de circulation des gaz dans le dispositif (déjà commentée) ;
- la figure 3 représente une vue en perspective du dispositif de mélange de gaz selon l'invention comprenant un collecteur d'entrée, un échangeur de chaleur, un collecteur de sortie et une vanne d'admission de gaz d'échappement recirculés dans le dispositif, le dispositif étant vu sensiblement depuis l'avant, c'est-à-dire, côté culasse ;
- la figure 4 représente une vue en perspective du dispositif de mélange de la figure 3, le dispositif étant vu sensiblement depuis l'arrière ;
- la figure 5 représente une vue en coupe longitudinale du collecteur de sortie du dispositif de la figure 3 relié à une forme de réalisation non revendiquée d'une culasse d'un moteur, la coupe étant réalisée selon la direction de circulation des gaz dans le dispositif ;
- la figure 6 représente une vue en coupe longitudinale du collecteur de sortie du dispositif de la figure 3 relié à une forme de réalisation revendiquée d'une culasse d'un moteur, la coupe étant réalisée selon la direction de circulation des gaz dans le dispositif ;
- la figure 7 représente une vue en coupe longitudinale de la vanne d'admission de gaz d'échappement recirculés du dispositif de la figure 3; et
- la figure 8 représente une vue en perspective du collecteur de sortie de la figure 3, le collecteur de sortie étant vu sensiblement depuis l'avant.

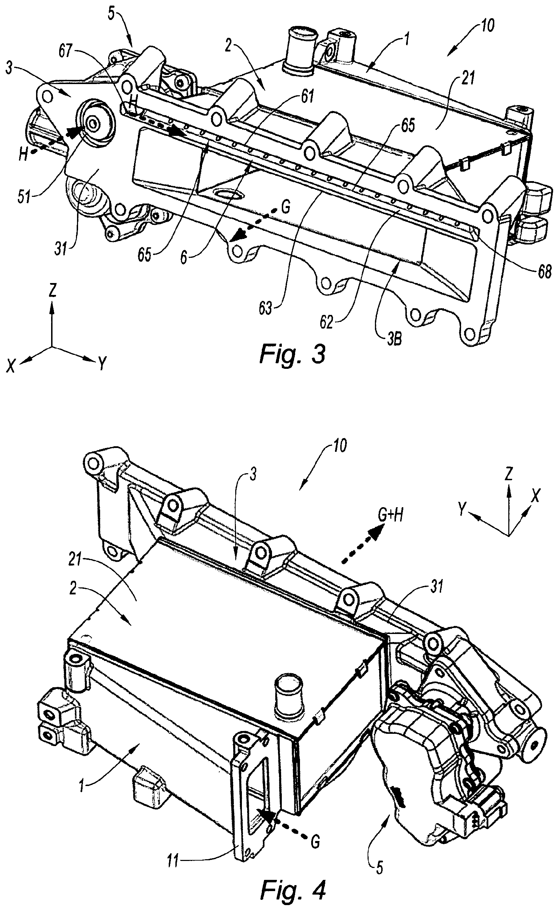

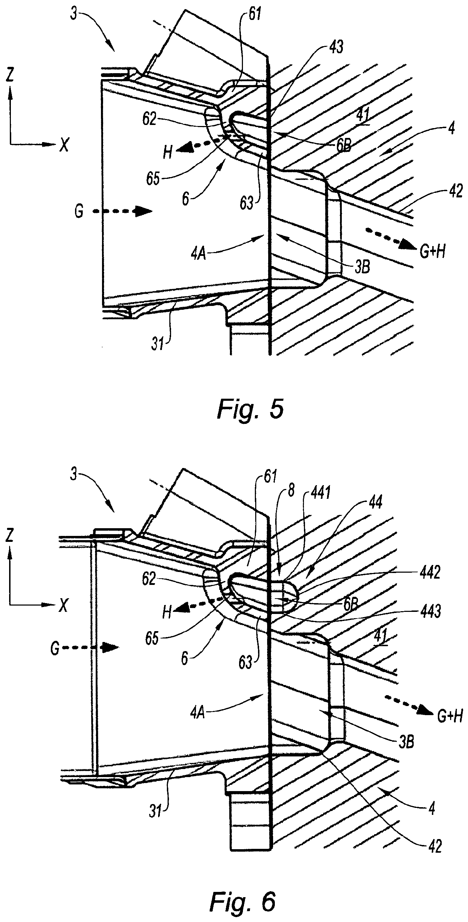

En référence à la figure 3, un dispositif 10 de mélange et de répartition d'un flux de gaz dans la culasse d'un moteur thermique de véhicule automobile (représentée sur le figures 5 et 6) comporte un échangeur de chaleur 2 comprenant un faisceau d'échange de chaleur agencé pour échanger de la chaleur avec un premier flux de gaz (G), ici des gaz d'admission comportant de l'air, circulant dans le faisceau d'échange de chaleur.

Par la suite, on définit les termes « amont » et « aval » par rapport au sens de circulation du flux de gaz d'admission (G) dans le dispositif de mélange 10, les gaz d'admission (G) circulant de l'amont vers l'aval dans le dispositif 10 selon une direction X de circulation des gaz représentée sur les figures 3 et 4.

Les gaz d'admission (G) sont introduits dans l'échangeur de chaleur 2 par un collecteur d'entrée 1, monté en amont de l'échangeur de chaleur 2, et évacués par un collecteur de sortie 3, également dénommé collecteur de répartition 3, monté en aval de l'échangeur de chaleur 2 et destiné à être relié à la culasse 4 du moteur. Le collecteur de répartition 3 permet une admission répartie, dans la culasse 4, du flux de gaz refroidi (G) issu de l'échangeur de chaleur 2.

Le dispositif de mélange 10 comprend en outre une canalisation 8 d'injection d'un flux de gaz d'échappement recirculés du moteur (H) connus de l'homme du métier sous son abréviation anglaise « EGR » correspondant à « Exhaust Gas recirculation ».

En référence aux figures 5 et 6, la canalisation d'injection 8 est formée entre le collecteur de sortie 3 et la culasse 4 de manière à injecter le flux de gaz d'échappement recirculés (H) dans le flux de gaz d'admission (G) en amont de la culasse 4.

Afin de bien comprendre l'invention, chaque élément du dispositif de mélange selon l'invention va être décrit individuellement aussi bien dans sa structure que dans sa fonction.

### - Echangeur de chaleur

En référence aux figures 3 et 4, l'échangeur de chaleur 2 comprend un carter d'échangeur 21 enveloppant un faisceau d'échange de chaleur comportant une pluralité d'éléments d'échange empilés (non représentés). Les espaces entre les éléments d'échange du faisceau forment des canaux de conduite du flux de gaz à refroidir (G), ici les gaz d'admission. Les éléments d'échange du faisceau sont creux et conduisent un fluide caloporteur, destiné à échanger de la chaleur avec le flux de gaz à refroidir (G) circulant d'amont en aval dans les canaux de conduite de fluide.

Le faisceau d'échange de chaleur se présente sous la forme d'un parallélépipède s'étendant dans sa longueur selon la direction X de circulation des gaz et comprenant une face d'entrée amont par laquelle sont introduits les gaz d'admission à refroidir (G) et une face de sortie aval par laquelle sont évacués les gaz d'admission refroidis (G).

Par la suite, on définit les termes « supérieur », « inférieur », « gauche » et « droite » par rapport à l'orientation du dispositif de mélange 10 représenté en perspective sur la figure 3 et conformément au repère orthogonal d'axes (X, Y, Z), l'axe X étant orienté de l'amont vers l'aval et correspondant à la direction X d'écoulement des gaz, l'axe Y étant orienté de la gauche vers la droite et l'axe Z étant orienté du bas vers le haut, c'est à dire de la partie inférieure du dispositif vers sa partie supérieure.

### - Collecteur d'entrée

Le collecteur d'entrée 1, représenté sur la figure 4, permet de guider et de répartir le flux de gaz à refroidir (G) sur la surface totale de la face d'entrée du faisceau d'échange de chaleur. A cet effet, le collecteur d'entrée 1 se présente sous la forme d'un carter sensiblement évasé de l'amont vers l'aval dont l'extrémité aval est reliée à l'extrémité amont du carter d'échangeur 21. Le collecteur d'entrée 1 comporte une face de sortie débouchant sur la face d'entrée de l'échangeur de chaleur 2, et un orifice d'entrée 11, par exemple situé latéralement, c'est-à-dire, dans un plan situé perpendiculairement à sa face de sortie, par lequel sont introduits les gaz d'admission à refroidir (G) dans le collecteur d'entrée 1.

### - Collecteur de répartition

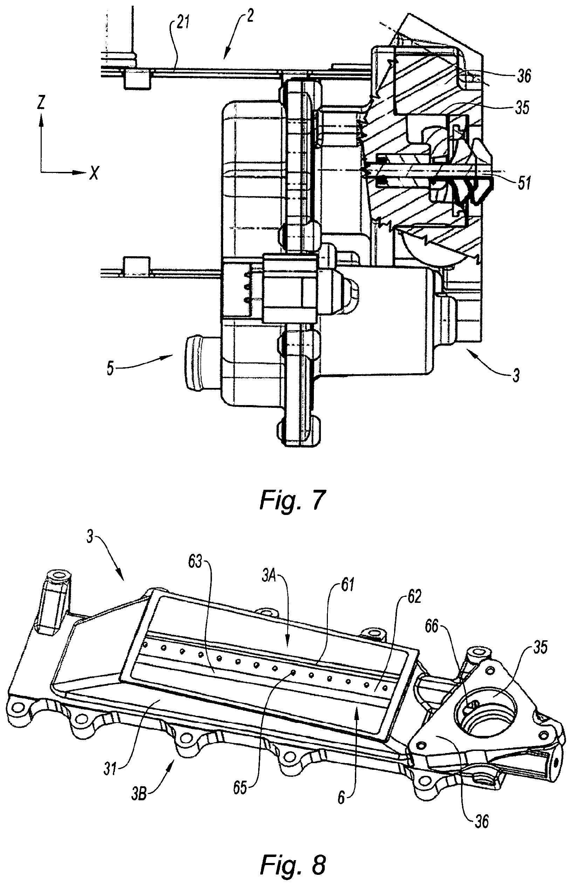

En référence aux figures 4 et 8, le collecteur de répartition 3, appelé également collecteur de sortie 3, monté en aval de l'échangeur de chaleur 2, comprend une face 3A d'entrée de gaz d'admission (G) dans laquelle débouche la face de sortie du faisceau d'échange de chaleur de l'échangeur 2, et une face de sortie 3B destinée à être reliée à la face d'entrée des gaz de la culasse 4.

Le collecteur de sortie 3 comprend un carter de collecteur 31 guidant les gaz introduits de la face d'entrée 3A du collecteur de sortie 3 jusqu'à la culasse du moteur 4 via la face de sortie 3B.

Comme indiqué précédemment, la canalisation d'injection tubulaire 8 du dispositif de mélange 10 est disposée à l'interface entre le collecteur de sortie 3 et la culasse 4. La canalisation d'injection tubulaire 8 est formée de deux parties distinctes, une première partie solidaire du carter du collecteur de sortie 31 et une deuxième partie solidaire de la culasse du moteur 4.

La partie de la canalisation d'injection tubulaire 8 qui est solidaire du carter 31 du collecteur de sortie 3 se présente, dans cette forme de réalisation du dispositif de mélange 10, sous la forme d'une goulotte 6 d'injection de gaz d'échappement recirculés. La goulotte d'injection 6 est agencée pour injecter un flux de gaz d'échappement recirculés (H) dans le flux de gaz refroidis (G) de manière à ce que les deux flux de gaz (G, H) se mélangent. Dans cet exemple, la goulotte d'injection 6 s'étend à l'extrémité aval du collecteur de sortie 3, à l'intérieur du carter de collecteur 31, le long de la paroi supérieure du carter de collecteur 31 comme représenté sur la figure 3. La goulotte d'injection 6 s'étend ici rectilignement depuis la gauche vers la droite dans toute la longueur de la paroi supérieure du carter de collecteur 31.

En référence à la figure 8, le carter de collecteur comporte un corps principal destiné à la circulation du flux de gaz d'admission (G), et un corps d'extension comprenant une embase 36 destinée au montage d'une vanne d'admission 5.

En référence à la figure 8, le collecteur de sortie 3 comporte une entrée d'admission d'un flux de gaz d'échappement recirculés (H) issu du moteur. Ladite entrée d'admission se présente sous la forme d'un orifice 35 traversant le carter de collecteur 31, par exemple selon la direction X, de manière à permettre le passage des gaz d'échappement recirculés, l'orifice traversant 35 étant formé dans l'embase 36 du corps d'extension. La vanne d'admission 5, représentée en détails sur la figure 7, comprend une soupape d'admission 51 qui est logée dans l'orifice d'admission 35 du collecteur de sortie 3 de manière à autoriser, après ouverture, un passage d'une partie du flux de gaz d'échappement recirculés (H) dans la goulotte d'injection 6 du collecteur de sortie 3. A cet effet, la goulotte d'injection 6 comporte à son extrémité gauche un orifice d'entrée 66 débouchant dans l'orifice d'admission 35 du corps d'extension du collecteur de sortie 3.

De manière avantageuse, en référence à la figure 8, l'orifice d'entrée 66 de la goulotte d'injection 6 s'étend obliquement par rapport à la direction Y de manière à permettre un démoulage du collecteur de sortie 3 obtenu par un procédé de fonderie sous pression. Cependant, l'orifice d'entrée 66 de la goulotte d'injection 6 pourrait également s'étendre selon la direction Y, des moyens de formation de cavité devant être alors utilisés lors du procédé de fonderie sous pression. Toutefois, de tels moyens de formation de cavité ne sont utilisables que pour un orifice dont la longueur est faible, ici de l'ordre de la valeur de son diamètre.

En référence à la figure 5, la goulotte d'injection 6 se présente sous la forme d'une demi-coquille et comporte une paroi extérieure 61 s'étendant selon la direction X, une paroi de fond 62 s'étendant selon la direction Y et une paroi intérieure 63 s'étendant selon la direction X.

La paroi extérieure 61 de la goulotte d'injection 6 est ici formée par la paroi du carter de collecteur 31. Les parois de fond 62 et intérieure 63 s'étendent dans le carter de collecteur 31, la paroi intérieure 63 s'étendant sensiblement parallèlement à la paroi extérieure 61 et la paroi de fond 62 reliant lesdites parois intérieure 63 et extérieure 61. Autrement dit, la goulotte d'injection 6 possède une section en U dont l'ouverture du U est orientée vers l'aval. La goulotte d'injection 6 est fermée à son extrémité gauche par une paroi gauche 67 s'étendant sensiblement parallèlement au plan (X, Z) qui est percée par l'orifice d'entrée 66 pour mettre en communication le volume de la goulotte d'injection 6 avec le volume de l'orifice traversant 35 destiné au passage de gaz d'échappement recirculés. Selon cette forme non-revendiquée, la goulotte d'injection 6 est fermée à son extrémité droite par une paroi droite 68, s'étendant sensiblement parallèlement au plan (X, Z), définie dans la paroi latérale droite du carter de collecteur 31.

La goulotte d'injection 6 comporte une face ouverte 6B, correspondant à l'ouverture du U, qui est configurée pour être fermée par la culasse. 4 de manière à former une canalisation d'injection tubulaire 8. En référence aux figures 5 et 6, la face ouverte 6B de la goulotte d'injection 6 est coplanaire à la face de sortie 3B du carter de collecteur 31. Autrement dit, l'extrémité aval de la paroi intérieure 63 de la goulotte d'injection 6 s'étend longitudinalement selon la direction X jusqu'à la face de sortie 3B du collecteur de sortie 3.

De par la forme de la goulotte d'injection 6, le collecteur de sortie 3 peut être obtenu par un procédé de fonderie par moulage sous pression dans lequel un métal en fusion est injecté sous pression entre des matrices définissant la forme et les dimensions du collecteur de sortie 3. Grâce à la forme de la goulotte d'injection 6 qui comprend une face ouverte 6B et qui est dépourvue de cavité, on peut former le collecteur de sortie 3 sans nécessiter de noyau.

Pour former la goulotte d'injection 6, une première matrice de fonderie vient épouser la surface amont de la goulotte d'injection 6 tandis qu'une deuxième matrice de fonderie vient épouser sa surface aval. La goulotte d'injection 6 est ainsi formée de manière simple et rapide. Le procédé de fonderie sous pression permet de raccourcir la durée de fabrication du collecteur de sortie 3 et, par voie de conséquence, de diminuer le coût d'un tel collecteur de sortie 3 ce qui est très avantageux.

En référence à la figure 3, la canalisation d'injection 6 s'étend transversalement à la direction X de circulation des gaz et comprend des moyen d'injection ménagés dans la goulotte d'injection 6 afin d'injecter le flux de gaz d'échappement recirculés (H) dans le flux de gaz refroidis (G). En référence à la figure 3, les moyens d'injection se présentent sous la forme d'une pluralité d'orifices d'injection 65 orientés vers l'amont. Autrement dit, les orifices d'injection 65 sont orientés à contre-courant du flux de gaz d'admission (G) de manière à former des turbulences importantes. Cela permet avantageusement de favoriser le cisaillement du flux de gaz refroidis (G) par le flux de gaz d'échappement (H).

Il a été ici décrit une pluralité d'orifices d'injection mais il va de soi que les moyens d'injection pourraient également se présenter sous la forme d'une fente longitudinale.

Le collecteur de sortie peut avantageusement être formé par un procédé de fonderie sous pression et être démoulé depuis l'avant, c'est-à-dire, depuis la face de sortie 3B du collecteur de sortie. Dans cet exemple, les orifices d'injection 65 de la goulotte d'injection sont usinés suite au démoulage du collecteur de sortie 3.

Comme indiqué précédemment, la canalisation d'injection 8 comporte une partie solidaire de la culasse 4 agencée pour fermer la face ouverte 6B de la goulotte d'injection 6.

### - Culasse du moteur

En référence aux figures 5 et 6, la culasse 4 du moteur comporte un corps de culasse 41 dans lequel est ménagé une canalisation d'admission 42 agencée pour conduire les gaz issus du collecteur de sortie 3 jusqu'aux cylindres du moteur. La canalisation d'admission 42 possède une face d'entrée 4A dont les dimensions correspondent à la face de sortie 3B du collecteur de sortie 3.

Selon la forme de réalisation non-revendiquée de la culasse représentée sur la figure 5, la deuxième partie de la canalisation d'injection 8, qui est solidaire de la culasse 4, est formée par une surface plane 43 du corps de culasse 41.

En référence à la figure 5, lors du montage du collecteur de sortie 3 avec la culasse 4, la goulotte d'injection 6, formée à l'extrémité aval du carter du collecteur 31, entre en contact avec la surface plane 43 du corps de culasse 41, la surface plane 43 de la culasse 4 venant fermer la face ouverte 6B de la goulotte d'injection 6 pour former une canalisation d'injection tubulaire 8 constituée en amont par la goulotte d'injection 6 et en aval par la surface plane 43 du corps de culasse 41. La canalisation tubulaire 8 possède une section sensiblement en U.

Le mode de réalisation revendiqué de la culasse 4 est décrit en référence à la figure 6. Les références utilisées pour décrire les éléments de structure ou fonction identique, équivalente ou similaire à celles des éléments de la figure 5 sont les mêmes, pour simplifier la description. D'ailleurs, l'ensemble de la description du mode de réalisation non-revendiqué de la figure 5 n'est pas reprise, cette description s'appliquant aux éléments de la figure 6 lorsqu'il n'y a pas d'incompatibilités. Seules les différences notables, structurelles et fonctionnelles, sont décrites.

Selon la forme de réalisation revendiquée de la culasse représentée sur la figure 6, la deuxième partie de la canalisation d'injection 8, qui est solidaire de la culasse 4, est formée par une goulotte de culasse 44, se présentant sous la forme d'une demi-coquille, qui est complémentaire de la goulotte d'injection 6.

Toujours en référence à la figure 6, la goulotte de culasse 44 est ménagée dans le corps de culasse 41 et comporte une paroi extérieure 441 s'étendant selon la direction X, une paroi de fond 442 s'étendant selon la direction Y et une paroi intérieure 443 s'étendant selon la direction X. La goulotte d'injection 6 et la goulotte de culasse 44 coopèrent par complémentarité de formes pour former la canalisation d'injection tubulaire 8. A cet effet, lorsque le collecteur de sortie 3 est monté sur la culasse 4, les parois extérieures 63, 443 et intérieures 61, 441 des goulottes d'injection 6 et de culasse 44 sont continues pour former une canalisation tubulaire de section sensiblement ovale comme représenté sur la figure 6.

Dans cette forme de réalisation revendiquée de la culasse 4, la goulotte de culasse 44 permet d'augmenter le volume de la canalisation d'injection tubulaire 8 en répartissant ledit volume entre le collecteur de sortie 3 et la culasse 4. Il va de soi que diverses formes de culasse 4 peuvent permettre la fermeture de la goulotte d'injection 6.

Le collecteur de sortie 3 et la culasse 4 sont ici solidarisés l'un à l'autre, par exemple, par des moyens mécaniques tels que vissage ou autre.

L'invention a été ici décrite avec une canalisation d'injection 8 formée entre le collecteur de répartition 3 et la culasse 4 du moteur. Cependant, la canalisation d'injection tubulaire 8 peut être formée entre le collecteur de répartition 3 et l'échangeur de chaleur 2, une autre forme de réalisation non-revendiquée.

Selon cette alternative non revendiquée, dans une deuxième forme de réalisation du collecteur de sortie 3, la goulotte d'injection 6 est ménagée à l'extrémité amont du collecteur de sortie 3 et comporte une face ouverte qui est coplanaire à la face d'entrée 3A du collecteur de sortie 3 de manière à pouvoir être fermée par le carter d'échangeur 21. Selon cette alternative non revendiquée, le carter d'échangeur peut comprendre une surface plane ou une goulotte d'échangeur qui seraient complémentaires de la goulotte d'injection 6 du collecteur de sortie 3 de manière à fermer la goulotte d'injection 6 à la manière de la culasse 4 comme expliqué précédemment.

De façon générale, afin de répartir les gaz d'échappement (H) de manière encore plus homogène dans la zone de leur injection, les moyens d'injection de la canalisation d'injection 8 pourraient déboucher sur plusieurs côtés du carter de collecteur 31.

Selon une forme de réalisation non revendiquée et non représentée, la canalisation d'injection tubulaire 8 est formée à l'interface entre le collecteur de sortie 3 et la culasse du moteur et la goulotte d'injection est ménagée dans la culasse du moteur 4 et possède une face ouverte configurée pour être fermée par le collecteur de sortie 3.

Le collecteur de sortie 3 comprend une partie complémentaire à la dite goulotte d'injection de la culasse, la partie complémentaire étant ménagée à l'extrémité aval du carter de collecteur 31 et étant définie par une épaisseur de matière dudit carter 31, c'est-à-dire, hors du flux de gaz d'admission (G). La partie complémentaire de fermeture peut avoir une section droite pour fermer la face d'ouverture de la goulotte d'injection par une surface plane ou une section en U ouverte vers l'aval de manière à augmenter le volume de la canalisation d'injection 8. Autrement dit, cette forme de réalisation non revendiquée et non-représentée correspond à la forme de réalisation non revendiquée de la figure 5 à la différence que c'est le collecteur de sortie 3 qui ferme la goulotte d'injection ménagée dans la culasse 4. Il va de soi que diverses formes de collecteur de sortie 3 peuvent permettre la fermeture de la goulotte d'injection formée dans la culasse 4.

Dans cette forme de réalisation non revendiquée et non représentée, la goulotte d'injection de la culasse 4 est reliée à un système d'alimentation en gaz d'échappement recirculés interne à la culasse et connu de l'homme du métier. De manière similaire aux modes de réalisation précédents, la goulotte d'injection comporte des moyens d'injection pouvant se présente sous la forme d'orifices ou d'une fente. Dans cette forme de réalisation non revendiquée et non représentée, les moyens d'injection sont ménagés dans le corps de culasse 41 de manière à relier la goulotte d'injection à la canalisation d'admission 42 de la culasse 4. Ainsi, les gaz d'échappement recirculés issus du moteur sont directement réinjectés dans le flux de gaz d'admission depuis la culasse sans circuler dans le collecteur de sortie 3.

Le collecteur de répartition et la culasse 4 sont ici solidarisés l'un à l'autre, par exemple, par soudage, brasage ou par des moyens mécaniques tels que vissage ou autre.

Une mise en oeuvre de l'invention va être maintenant présentée en référence à la figure 5.

### - Mise en oeuvre

Au cours du fonctionnement du dispositif de mélange 10 selon l'invention, un flux de gaz d'admission à refroidir (G) est introduit par l'orifice d'entrée du collecteur d'entrée 1 et circule d'amont en aval dans le faisceau d'échange de chaleur, selon la direction X de circulation des gaz, pour être refroidi. Le flux de gaz d'admission refroidis (G) circule ensuite dans le collecteur de sortie 3.

Au niveau de la face de sortie 3B du collecteur de sortie 3, le flux de gaz d'admission refroidis (G) est cisaillé par le flux de gaz d'échappement recirculés (H) injectés dans le sens inverse à celui du flux de gaz refroidis. Les turbulences générées par le cisaillement dans la zone de confluence des gaz (H, G) favorisent le mélange des flux de gaz pour former un flux de gaz homogène qui est admis par les cylindres du moteur via la culasse 4.

Ainsi, le dispositif selon l'invention permet d'obtenir un mélange homogène des gaz admis dans la culasse 4 du moteur en alliant compacité, efficacité et rendement. En outre, le dispositif peut être monté de manière simple et rapide.

L'invention a été décrite avec une goulotte d'injection comprenant une face ouverte coplanaire soit à la face de sortie, soit à la face d'entrée du collecteur de sortie 3. Il va de soi que la face ouverte pourrait être uniquement parallèle à une desdites faces sans pour autant être dans le même plan. Autrement dit, la face ouverte est décalée axialement par rapport à ladite face. La partie complémentaire de la canalisation d'injection, formée sur l'échangeur de chaleur ou sur la culasse, est alors décalée axialement par rapport à la face d'entrée de la culasse ou de sortie du collecteur de manière à fermer la face ouverte de la goulotte d'injection du collecteur. En outre, la face ouverte de la goulotte d'injection peut être inclinée par rapport à la face de sortie ou la face d'entrée du collecteur, l'important étant que ladite face ouverte soit adaptée pour être fermée par la culasse de moteur 4, l'échangeur de chaleur 2 ou tout autre élément extérieur au collecteur de sortie 3 pour former une canalisation d'injection tubulaire 8. De préférence, l'élément extérieur vient fermer la goulotte d'injection via la face d'entrée ou de sortie du collecteur de sortie.

## Revendications

1. Ensemble d'une culasse (4) d'un moteur thermique de véhicule automobile et d'un dispositif de mélange d'un flux de gaz d'admission (G) et d'un flux de gaz d'échappement recirculés (H) en vue de leur admission dans la culasse (4), ledit dispositif comportant :
- un échangeur de chaleur (2) comportant un faisceau d'échange de chaleur de refroidissement de gaz (G) et
- un collecteur (3) de répartition des gaz dans la culasse (4, 5), le collecteur (3) comportant :
- un carter de collecteur (31) comportant une face d'entrée (3A) d'un flux de gaz d'admission (G) dans laquelle débouche la face de sortie du faisceau d'échange de chaleur de l'échangeur (2) et une face de sortie (3B) destinée à déboucher dans la culasse du moteur (4)
**caractérisé en ce que**
- le collecteur (3) de répartition des gaz dans la culasse (4, 5) comporte une goulotte (6) d'injection d'un flux de gaz d'échappement recirculés (H) du moteur dans le flux de gaz d'admission (G), le carter de collecteur (31) et la goulotte d'injection (6) formant un ensemble monobloc, ladite goulotte d'injection (6) possédant une face ouverte (6B) et formant une première partie d'une canalisation d'injection tubulaire (8),
- la culasse (4) comporte une deuxième partie de la canalisation d'injection tubulaire (8), laquelle deuxième partie est solidaire de la culasse (4) et est formée par une goulotte de culasse (44) complémentaire de la goulotte d'injection(6),
- le carter de collecteur (31) comprenant un orifice traversant (35) destiné au passage des gaz d'échappement recirculés (H) s'étendant perpendiculairement à la face de sortie (3B) du carter de collecteur (31), la goulotte d'injection (6) débouchant dans ledit orifice traversant (35).

2. Ensemble selon la revendication précédente, dans lequel le collecteur (3) et la goulotte d'injection (6) sont obtenus par un procédé de fonderie par moulage sous pression.

3. Ensemble selon l'une des revendications précédentes, dans lequel la goulotte d'injection (6) se présente sous la forme d'une demi-coquille.

4. Ensemble selon l'une des revendications précédentes, dans lequel la goulotte de culasse (44) se présente sous la forme d'une demi-coquille.

5. Ensemble selon l'une des revendications précédentes, dans lequel la face ouverte (6B) de la goulotte d'injection (6) s'étend parallèlement à la face de sortie (3B) dudit carter de collecteur (31).

6. Ensemble selon la revendication précédente, dans lequel, la face ouverte (6B) de ladite goulotte d'injection (6) est coplanaire à la face de sortie (3B) dudit carter de collecteur (31).

7. Ensemble selon l'une des revendications précédentes, dans lequel la goulotte d'injection (6) comporte au moins un orifice d'injection (63) agencé pour injecter dans le carter de collecteur (31) un flux de gaz d'échappement recirculés (H).

8. Ensemble selon la revendication précédente, dans lequel ledit orifice d'injection (63) est orienté de manière à injecter le flux de gaz d'échappement recirculés dans le sens opposé au flux de gaz d'admission.

9. Ensemble selon l'une des revendications précédentes, dans lequel, le carter de collecteur (31) comporte :
- un corps principal destiné à la circulation du flux de gaz d'admission (G), et
- un corps d'extension comprenant une embase (36) destinée au montage d'une vanne (5) d'admission de gaz d'échappement recirculés (H), l'orifice traversant (35), destiné au passage des gaz d'échappement recirculés (H), étant formé dans ladite embase (36).

10. Ensemble selon l'une des revendications précédentes dans lequel la canalisation tubulaire (8) d'injection d'un flux de gaz d'échappement recirculés (H) du moteur dans le flux de gaz d'admission (G) est formée de deux parties complémentaires, la canalisation d'injection (8) comprenant une première partie définie par le collecteur (3) et une deuxième partie définie par la culasse (4), la première ou la deuxième partie de la canalisation d'injection (8) comprenant la face ouverte (6B) configurée pour être fermée par ladite autre partie complémentaire de manière à former la canalisation d'injection tubulaire (8).

## Patentansprüche

1. Einheit aus einem Zylinderkopf (4) eines Verbrennungsmotors eines Kraftfahrzeugs und einer Vorrichtung zum Mischen eines Flusses von Ansauggasen (G) und eines Flusses von rückgeführten Abgasen (H) für ihr Ansaugen in den Zylinderkopf (4), wobei die Vorrichtung aufweist:
- einen Wärmetauscher (2), der ein Wärmetauscherbündel zum Kühlen von Gas (G) aufweist, und
- einen Sammler (3) zur Verteilung der Gase im Zylinderkopf (4, 5), wobei der Sammler (3) aufweist:
- ein Sammlergehäuse (31), das eine Eingangsseite (3A) eines Flusses von Ansauggasen (G), in die die Ausgangsseite des Wärmetauscherbündels des Tauschers (2) mündet, und eine Ausgangsseite (3B) aufweist, die dazu bestimmt ist, in den Zylinderkopf des Motors (4) zu münden,
**dadurch gekennzeichnet, dass**
- der Sammler (3) zur Verteilung der Gase im Zylinderkopf (4, 5) eine Rinne (6) zum Einspritzen eines Flusses rückgeführter Abgase (H) des Motors in den Fluss von Ansauggasen (G) aufweist, wobei das Sammlergehäuse (31) und die Einspritzrinne (6) eine einstückige Einheit bilden, wobei die Einspritzrinne (6) eine offene Seite (6B) besitzt und einen ersten Teil einer rohrförmigen Einspritzleitung (8) bildet,
- der Zylinderkopf (4) einen zweiten Teil der rohrförmigen Einspritzleitung (8) aufweist, wobei der zweite Teil fest mit dem Zylinderkopf (4) verbunden ist und von einer Zylinderkopfrinne (44) gebildet wird, die komplementär zur Einspritzrinne (6) ist,
- wobei das Sammlergehäuse (31) eine für den Durchgang der rückgeführten Abgase (H) bestimmte Durchgangsöffnung (35) enthält, die sich lotrecht zur Ausgangsseite (3B) des Sammlergehäuses (31) erstreckt, wobei die Einspritzrinne (6) in die Durchgangsöffnung (35) mündet.

2. Einheit nach dem vorhergehenden Anspruch, wobei der Sammler (3) und die Einspritzrinne (6) durch ein Gießverfahren durch Druckguss erhalten werden.

3. Einheit nach einem der vorhergehenden Ansprüche, wobei die Einspritzrinne (6) in Form einer Halbschale vorliegt.

4. Einheit nach einem der vorhergehenden Ansprüche, wobei die Zylinderkopfrinne (44) in Form einer Halbschale vorliegt.

5. Einheit nach einem der vorhergehenden Ansprüche, wobei die offene Seite (6B) der Einspritzrinne (6) sich parallel zur Ausgangsseite (3B) des Sammlergehäuses (31) erstreckt.

6. Einheit nach dem vorhergehenden Anspruch, wobei die offene Seite (6B) der Einspritzrinne (6) zur Ausgangsseite (3B) des Sammlergehäuses (31) koplanar ist.

7. Einheit nach einem der vorhergehenden Ansprüche, wobei die Einspritzrinne (6) mindestens eine Einspritzöffnung (63) aufweist, die eingerichtet ist, um in das Sammlergehäuse (31) einen Fluss rückgeführter Abgase (H) einzuspritzen.

8. Einheit nach dem vorhergehenden Anspruch, wobei die Einspritzöffnung (63) so ausgerichtet ist, dass der Fluss rückgeführter Abgase in entgegengesetzter Richtung zum Fluss von Ansauggasen eingespritzt wird.

9. Einheit nach einem der vorhergehenden Ansprüche, wobei das Sammlergehäuse (31) aufweist:
- einen Hauptkörper, der für den Durchfluss des Flusses von Ansauggasen (G) bestimmt ist, und
- einen Erweiterungskörper, der einen Sockel (36) enthält, der zur Montage eines Ansaugventils (5) rückgeführter Abgase (H) bestimmt ist, wobei die Durchgangsöffnung (35), die für den Durchgang der rückgeführten Abgase (H) bestimmt ist, im Sockel (36) ausgebildet ist.

10. Einheit nach einem der vorhergehenden Ansprüche, wobei die rohrförmige Leitung (8) zum Einspritzen eines Flusses rückgeführter Abgase (H) des Motors in den Fluss von Ansauggasen (G) von zwei komplementären Teilen gebildet wird, wobei die Einspritzleitung (8) einen vom Sammler (3) definierten ersten Teil und einen vom Zylinderkopf (4) definierten zweiten Teil enthält, wobei der erste oder der zweite Teil der Einspritzleitung (8) die offene Seite (6B) enthält, die konfiguriert ist, vom anderen komplementären Teil verschlossen zu werden, um die rohrförmige Einspritzleitung (8) zu bilden.

## Claims

1. Assembly of a cylinder head (4) of a motor vehicle combustion engine and of a device for mixing a stream of charge gases (G) and a stream of recirculated exhaust gases (H) so that they can be admitted into the cylinder head (4), the said device comprising:
- a heat exchanger (2) comprising a heat-exchange core bundle for cooling the gases (G), and
- a collector (3) for distributing the gases in the cylinder head (4, 5), the collector (3) comprising:
- a collector casing (31) comprising an inlet face (3A) for a stream of charge gases (G), into which the outlet face of the heat-exchange core bundle of the exchanger (2) opens and an outlet face (3B) intended to open into the cylinder head of the engine (4),
**characterized in that**
- the collector (3) for distributing the gases in the cylinder head (4, 5) comprises a chute (6) for injecting a stream of recirculated exhaust gases (H) from the engine into the stream of charge gases (G), the collector casing (31) and the injection chute (6) forming a one-piece assembly, the said injection chute (6) having an open face (6B) and forming a first part of a tubular injection line (8),
- the cylinder head (4) comprises a second part of the tubular injection line (8), which second part is secured to the cylinder head (4) and is formed by a cylinder head chute (44) that complements the injection chute (6),
- the collector casing (31) comprising a through-orifice (35) intended for the passage of the recirculated exhaust gases (H) extending at right angles to the outlet face (3B) of the collector casing (31), the injection chute (6) opening into the said through-orifice (35).

2. Assembly according to the preceding claim, in which the collector (3) and the injection chute (6) are obtained by a pressure die casting method.

3. Assembly according to one of the preceding claims, in which the injection chute (6) takes the form of a half-shell.

4. Assembly according to one of the preceding claims, in which the cylinder head chute (44) takes the form of a half-shell.

5. Assembly according to one of the preceding claims, in which the open face (6B) of the injection chute (6) extends parallel to the outlet face (3B) of the said collector casing (31).

6. Assembly according to the preceding claim, in which the open face (6B) of the said injection chute (6) is coplanar with the outlet face (3B) of the said collector casing (31).

7. Assembly according to one of the preceding claims, in which the injection chute (6) comprises at least one injection orifice (63) designed to inject a stream of recirculated exhaust gases (H) into the collector casing (31).

8. Assembly according to the preceding claim, in which the said injection orifice (63) is oriented in such a way as to inject the stream of recirculated exhaust gases in the opposite direction to the stream of charge gases.

9. Assembly according to one of the preceding claims, in which the collector casing (31) comprises:
- a main body intended for the circulation of the stream of charge gases (G), and
- an extension body comprising a mount (36) intended for the mounting of an intake valve (5) for the recirculated exhaust gases (H), the through-orifice (35) intended for the passage of the recirculated exhaust gases (H) being formed in the said mount (36).

10. Assembly according to one of the preceding claims, in which the tubular injection line (8) for injecting a stream of recirculated exhaust gases (H) from the engine into the stream of charge gases (G) is formed of two complementing parts, the injection line (8) comprising a first part defined by the collector (3) and a second part defined by the cylinder head (4), the first or the second part of the injection line (8) comprising the open face (6B) configured to be closed by the said other complementary part so as to form the tubular injection line (8).
